# EUROPÄISCHE PATENTANMELDUNG

(11) **EP 0 895 372 A2**
(43) Veröffentlichungstag der Anmeldung: **03.02.1999**
(21) Anmeldenummer: 98202458.0
(22) Anmeldetag: 22.07.1998
(51) Int. Cl.: H04L 1/20

(54) **Schaltungsanordnung zur Messung einer Bitfehlerrate**

(30) Priorität: 30.07.1997 DE 19732739
(71) Anmelder: Philips Patentverwaltung GmbH, 22335 Hamburg (DE); Koninklijke Philips Electronics N.V., 5621 BA Eindhoven (NL)
(72) Erfinder: Wichern, Andreas, Röntgenstrasse 24, 22335 Hamburg (DE); Wiese, Peter, Röntgenstrasse 24, 22335 Hamburg (DE)
(74) Vertreter: Peters, Carl Heinrich, Dipl.-Ing.

(57) **Zusammenfassung**

Eine Schaltungsanordnung zur Messung einer in einer Nachrichtenübertragungseinrichtung auftretenden Bitfehlerrate ermöglicht eine schnelle Erkennung von Änderungen dieser Bitfehlerrate dadurch, daß folgende Elemente umfaßt sind:
- eine Meßsignalquelle zum Zuführen eines Meßsignals zu der Nachrichtenübertragungseinrichtung,
- eine Vergleichsstufe zum Vergleichen des Meßsignals mit einem Empfangssignal, welches von der Nachrichtenübertragungseinrichtung bei Zufuhr des Meßsignals abgegeben wird, und zum Abgeben eines Fehlersignals, welches einen ersten Signalpegel annimmt, wenn die Signalwerte von Empfangssignal und Meßsignal übereinstimmen, und welches im übrigen einen zweiten Signalpegel annimmt,
- eine Impulsformstufe zum Abgeben eines Impulssignals vorbestimmten zeitlichen Verlaufes beim Auftreten eines Übergangs im Fehlersignal von einem ausgewählten der Signalpegel zum anderen und
- eine Integrationsstufe zum Aufintegrieren des Impulssignals.

## Beschreibung

Die Erfindung bezieht sich auf eine Schaltungsanordnung zur Messung einer in einer Nachrichtenübertragungseinrichtung aufrretenden Bitfehlerrate.

Bei digitalen Nachrichtenübertragungsernrichtungen und -systemen wird zur Charakterisierung der Signalqualität als Meßgröße die Bitfehlerrate verwendet, die den Prozentsatz der von der Nachrichtenübertragungseinrichtung falsch wiedergegebenen Bits bezeichnet, bezogen auf die Anzahl aller Bits eines der Nachrichtenübertragungseinrichtung zugeführten, digitalen Signals. Die Bitfehlerrate ist somit ein Maß für die Störsicherheit der Nachrichtenübertragungseinrichtung.

Übertragungsfehler in einer Nachrichtenübertragungseinrichtung treten in der Regel stochastisch, d.h. zu unvorhergesehenen Zeitpunkten auf. Für die Messung der Bitfehlerrate ist daher eine Mittelung über einen hinreichend langen Zeitraum erforderlich, um den Einfluß der stochastischen Verteilung der Bitfehler im Signal hinreichend zu verringern und damit einen zuverlässigen Meßwert zu erhalten. Dieser Meßzeitraum ist insbesondere dann sehr groß zu wählen, wenn die zu messende Nachrichtenübertragungseinrichtung einerseits mit einer relativ geringen Datenrate und andererseits mit einer relativ geringen Bitfehletrate arbeitet. So ist für die Bestimmung der Bitfehletrate von Funkrufempfängern (Pagern), die beispielsweise mit einer Datenrate von 1200 Bit pro Sekunde arbeiten, regelmäßig ein Meßzeitraum im Bereich von mehreren Sekunden erforderlich, um überhaupt einen Meßwert für die Bitfehlerrate zu erhalten.

Die notwendigen langen Meßzeiträume verhindern bei Bitfehlertaten-Meßeinrichtungen der üblichen Art eine schnelle Erkennung von Veränderungen der gemessenen Bitfehlerraten. Dies gestaltet Meß- und Abgleicharbeiten besonders langwierig, da nach jedem Eingriff in die zu messende bzw. abzugleichende Nachrichtenübertragungseinrichtung ein relativ großer Zeitraum verstreichen muß, bis überhaupt eine Ändetung der Bitfehletrate erkennbar wird. Das gleiche gilt für Änderungen in den Übertragungsbedingungen beim Einsatz derartiger Nachrichtenübertragungseinrichtungen, insbesondere, wenn diese für einen mobilen Einsatz vorgesehen sind. Die stark verzögerte Erkennung einer Veränderung der Bitfehlertate verhindert beim Betrieb derartiger, beispielsweise mobiler Nachrichtenübertragungseinrichtungen auch eine schnelle und rechtzeitige Reaktion beispielsweise auf eine Verschlechterung der Übertragungsbedingungen.

Die Erfindung hat die Aufgabe, eine Schaltungsanordnung zur Messung einer Bitfehlertate zu schaffen, die auch unter den genannten Bedingungen eine schnelle Erkennung von Veränderungen der Bitfehlerrate und damit eine schnelle Reaktion auf diese Veränderungen ermöglicht.

Erfindungsgemäß wird diese Aufgabe bei der gattungsgemäßen Schaltungsanordnung gelöst durch
- eine Meßsignalquelle zum Zuführen eines Meßsignals zu der Nachrichtenübertragungseinrichtung,
- eine Vergleichsstufe zum Vergleichen des Meßsignals mit einem Empfangssignal, welches von der Nachrichtenübertragungseinrichtung bei Zufuhr des Meßsignals abgegeben wird, und zum Abgeben eines Fehlersignals, welches einen ersten Signalpegel annimmt, wenn die Signalwerte von Empfangssignal und Meßsignal übereinstimmen, und welches im übrigen einen zweiten Signalpegel annimmt,
- eine Impulsformstufe zum Abgeben eines Impulssignals vorbestimmten zeitlichen Verlaufes beim Auftreten eines Übergangs im Fehlersignal von einem ausgewählten der Signalpegel zum anderen und eine Integrationsstufe zum Aufintegrieren des Impulssignals.

Im Gegensatz zur Bestimmung der Bitfehlerrate durch (digitale) Zählung der innerhalb des Meßzeitraums auftretenden Bitfehler und Quatientenbildung mit der Datenrate (Bitrate) der zu vermessenden Nachrichtenübertragungseinrichtung wird von der erfindungsgemäßen Schaltungsanordnung beim Auftreten jedes Bitfehlers ein Impuls mit definiertem Zeitverlauf erzeugt. Diese Impulse werden aufintegriert, wozu eine einfache, analoge Integrationsstufe völlig ausreicht, und können dann als einfaches Analogsignal ausgewertet bzw. zur Anzeige gebracht werden. Dazu kann bevorzugt eine Anzeigeeinrichtung vorgesehen sein. Zur Kalibrierung der erfindungsgemäßen Schaltungsanordnung ist es ferner vorteilhaft, eine der Integrationsstufe vorgeschaltete Einstellvorrichtung für die Amplitude des Impulssignals vorzusehen.

Mit der erfindungsgemäßen Schaltungsanordnung ist es möglich, aus dem zeitlichen Verlauf des aufintegrierten Impulssignals eine sehr schnell auf Veränderungen reagierende Meßgröße für die Bitfehlerrate zu erhalten. Durch Wahl insbesondere der Länge der Impulse des Impulssignals und der Integrationszeitkonstanten der Integrationsstufe, aber auch der Amplitudeneinstellung in der Einstellvorrichtung kann erreicht werden, daß der Signalwert des aufintegrierten Impulssignals einerseits nur gering von statistischen Schwankungen der Bitfehlerrate bei unveränderter Nachrichtenübertragungseinrichtung und unveränderten Übertragungsbedingungen beeinflußt wird und andererseits bei Veränderungen in der Nachrichtenübertragungseinrichtung und den Übertragungsbedingungen sehr schnell auf dadurch bedingte Veränderungen der Bitfehlerrate reagiert. Dadurch werden nicht nur Abgleicharbeiten mit vertretbarem Zeitaufwand möglich, sondern auch der Betrieb von beispielsweise Regelanordnungen, durch die beispielsweise Übertragungsparameter der Nachrichtenübertragungseinrichtung zur Ausregelung von Verschlechterungen der Bitfehlerrate einstellbar sind. Bei entsprechender Kalibrierung durch die Einstellvorrichtung ist auch eine Anzeige der Bitfehlerrate als absoluter Wert möglich.

An dieser Stelle sei bemerkt, daß aus dem "MARKUSH GUIDEBOOK of Electronic Circuits", 1974, Seite 68, eine Drehzahlmesserschaltung bekannt ist, die einen Monovibrator umfaßt, der durch die Unterbrecherkontakte eines Kraftfabrzeugmotors angesteuert wird. Diese Drehzahlmesserschaltung umfaßt ein Eingangsfilter zum Differenzieren der Wellenform der Spannung von den Unterbrecherkontakten der Zündung des Kraftfahrzeugmotors, um Störimpulse und Störschwingungen auszufiltern. Vom Ausgang dieses Filters wird ein Monovibrator zur Erzeugung von Impulsen konstanter Zeitdauer angesteuert. Der Mittelwert einer vom Monovibrator abgegebenen Spannung ist dann proportional der Drehzahl des Kraftfahrzeugmotors, ohne Verfälschungen durch die mit der Drehzahl des Kraftfahrzeugmotors variierende Impulsbreite der Impulse von den Unterbrecherkontakten.

Ein Ausführungsbeispiel ist in der Zeichnung dargestellt und wird im nachfolgenden naher beschrieben. Darin zeigt
Fig. 1 ein Blockschaltbild einer erfindungsgemäßen Schaltungsanordnung und
Fig. 2 eine etwas detailliertere Darstellung eines Teils der Schaltungsanordnung nach Fig. 1.

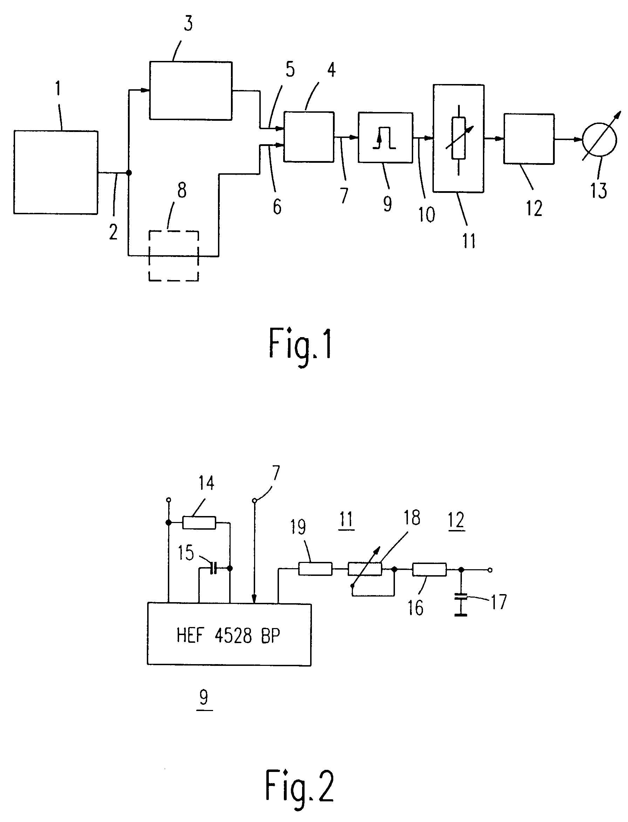

Die Anordnung nach Fig. 1 umfaßt eine Meßsignalquelle 1, beispielsweise einen Meßsender zum Abgeben eines digitalen (bzw. binären) Meßsignals vorgebbarer Datenrate. Dieses Meßsignal wird an einem Meßsignalausgang 2 der Meßsignalquelle 1 abgegeben und einerseits einer Nachrichtenübertragungseinrichtung 3 sowie andererseits einem zweiten Eingang 6 einer Vergleichsstufe 4 zugeführt. Aufgrund der Zufuhr des Meßsignals an die Nachrichtenübertragungseinrichtung 3 wird von dieser ein Empfangssignal an einen ersten Eingang 5 der Vergleichsstufe 4 geleitet. Die Vergleichsstufe 4 gibt an ihrem Ausgang 7 ein Fehlersignal ab, welches einen ersten, vorzugsweise niedrigen, Signalpegel annimmt, wenn die Signalwerte des Empfangssignals am ersten Eingang 5 und des Meßsignals am zweiten Eingang 6 der Vergleichsstufe 4 übereinstimmen. Bei dem digitalen (bzw. binären) Meßsignal bedeutet dies, daß die Signale an den Eingängen 5, 6 der Vergleichsstufe 4 stets übereinstimmende logische Pegel aufweisen. Um Fehler verursachende Laufzeitdifferenzen durch die Nachrichtenübertragungseinrichtung 3 zu vermeiden, kann in die Verbindung zwischen dem Meßsignalausgang 2 und dem zweiten Eingang 6 wahlweise eine Verzögerungsstufe 8 eingefügt sein.

In dem Fall, wo durch Übertragungsfehler in der Nachrichtenübertragungseinrichtung 3 die Signalwerte des Meßsignals und des Empfangssignals voneinander abweichen, also insbesondere unterschledliche logische Pegel aufweisen, nimmt das Fehlersignal am Ausgang 7 der Vergleichsstufe 4 einen zweiten Signalpegel an, der vorzugsweise einem hohen logischen Pegel entspricht.

Das Fehlersignal vom Ausgang 7 der Vergleichsstufe 4 wird einer Impulsformstufe 9 zugeleitet. Die Impulsformstufe 9 gibt an ihrem Ausgang 10 ein Impulssignal ab. Dieses Impulssignal enthält Impulse vorbestimmten zeitlichen Verlaufes, insbesondere vorbestimmter Zeitdauer, die bei jedem Übergang im Fehlersignal vom ersten Signalpegel zum zweiten Signalpegel von der Impulsformstufe 9 ausgelöst werden. Über eine Einstellvorrichtung 11 gelangt dieses Impulssignal an eine Integrationsstufe 12 zum Aufintegrieren, d.h. zum Aufintegrieren der Impulse im Impulssignal. Das aufintegrierte Impulssignal wird einer Anzeigeeinrichtung 13 zum Darstellen des Signalwertes des aufintegrierten Impulssignals zugeleitet. Dieses Anzeigeeinrichtung 13 kann bevorzugt durch ein analoges Ampermeter gebildet werden.

Fig. 2 zeigt eine detailliertere Darstellung für ein Ausführungsbeispiel der Impulsformstufe 9, der Einstellvorrichtung 11 und der Integrationsstufe 12, worin für übereinstimmende Elemente die Bezugszeichen aus Fig. 1 eingetragen sind. Bei diesem Ausführungsbeispiel umfaßt die Impulsformstufe 9 einen monostabilen Multivibrator vom Typ HEF 4528BP, dessen Triggereingang mit dem Ausgang 7 der Vergleichsstufe 4 und dessen Impulsausgang über die Einstellvorrichtung 11 mit der Integrationsstufe 12 verbunden ist. Die Impulsdauer der Impulse des von der Impulsformstufe 9 abgegebenen Impulssignals wird durch einen Widerstand 14 und eine Kapazität 15 bestimmt. Diese impulsdauerbestimmenden Elemente 14, 15 sind in an sich bekannter Weise mit dem monostabilen Multivibrator HEF 4528BP verbunden. Die Integrationsstufe 12 ist in Fig. 2 durch einen einfachen RC-Tiefpaß gebildet mit einem Langswiderstand 16 und einer Querkapazität 17. Die Elemente 16, 17 bestimmen die Integrationszeitkonstante der Integrationsstufe 12.

Die zwischen die Impulsformstufe 9 und die Integrationsstufe 12 eingefügte Einstellvorrichtung 11 umfaßt gemäß Fig. 2 einen einstellbaren Widerstand 18 mit einem in Reihe vorgeschalteten Schutzwiderstand 19. Über den einstellbaren Widerstand 18 kann die Amplitude der Impulse des Impulssignals eingestellt und damit letztlich das der Anzeigeeinrichtung 13 zugeleitete, aufintegrierte Impulssignal bzw. der dieses darstellende Strom kalibriert werden. Damit kann die Anzeigeeinrichtung 13 zur absoluten Anzeige der gemessenen Bitfehlerrate dienen.

Bei entsprechend dimensionierter Impulsdauer durch die impulsdauerbestimmenden Elemente 14, 15 und geeignet gewählter Integrationszeitkonstanten durch die Dimensionierung des Längswiderstands 16 und der Querkapazität 17 läßt sich in der Anzeigeeinrichtung 13 eine nur relativ geringen Schwankungen unterworfene Anzeige erhalten, die sehr schnell auf Veränderungen der Bitfehlerrate reagiert und auf diese Weise Abgleicharbeiten oder Regelvorgänge erleichtert, wirtschaftlich macht oder erst ermöglicht.

In einem Dimensionierungsbeispiel wurden folgende Werte gewählt:
- Widerstand 14:: 270 kOhm,
- Kapazitat 15:: 2,2 nF,
- Längswiderstand 16:: 47 kOhm,
- Querkapazität 17:: 47 µF,
- einstellbarer Widerstand 18:: 0 bis 50 kOhm,
- Schutzwiderstand 19:: 1 kOhm.

## Patentansprüche

1. Schaltungsanordnung zur Messung einer in einer Nachrichterübertragungseinrichtung auftretenden Bitfehlerrate, gekennzeichnet durch
- eine Meßsignalquelle zum Zuführen eines Meßsignals zu der Nachrichtenübertragungseinrichtung,
- eine Vergleichsstufe zum Vergleichen des Meßsignals mit einem Empfangssignal, welches von der Nachrichtenübertragungseinrichtung bei Zufuhr des Meßsignals abgegeben wird, und zum Abgeben eines Fehlersignals, welches einen ersten Signalpegel annimmt, wenn die Signalwerte von Empfangssignal und Meßsignal übereinstimmen, und welches im übrigen einen zweiten Signalpegel annimmt,
- eine Impulsformstufe zum Abgeben eines Impulssignals vorbestimmten zeitlichen Verlaufes beim Auftreten eines Übergangs im Fehlersignal von einem ausgewählten der Signalpegel zum anderen und
- eine Integrationsstufe zum Aufintegrieren des Impulssignals.

2. Schaltungsanordnung nach Anspruch 1, gekennzeichnet durch
eine Anzeigeeinrichtung zum Darstellen des Signalwertes des aufintegrierten Impulssignals.

3. Schaltungsanordnung nach Anspruch 1, gekennzeichnet durch
eine der Integrationsstufe vorgeschaltete Einstellvorrichtung für die Amplitude des Impulssignals.
